# EUROPÄISCHE PATENTSCHRIFT

(11) **EP 3 165 758 B1**
(45) Veröffentlichungstag und Bekanntmachung des Hinweises auf die Patenterteilung: **04.09.2019**
(21) Anmeldenummer: 16197358.1
(22) Anmeldetag: 04.11.2016
(51) Int. Cl.: F02K 9/34, F02K 9/74, F02K 9/95, F42B 15/10

(54) **AUSSTOSSTRIEBWERK MIT IN RINGFORM AUSGESTALTETER BRENNKAMMER**
EJECTION ENGINE HAVING AN ANNULAR COMBUSTION CHAMBER
MOTEUR À EXPULSION AYANT UNE CHAMBRE DE COMBUSTION ANNULAIRE

(30) Priorität: 05.11.2015 DE 102015119003
(43) Veröffentlichungstag der Anmeldung: 10.05.2017
(73) Patentinhaber: Bayern-Chemie Gesellschaft für flugchemische Antriebe mbH, 84544 Aschau am Inn (DE)
(72) Erfinder: Bartinger, Franz, 84494 Neumarkt-St. Veit (DE); Hacker, Andreas, 83536 Gars (DE); Niedermaier, Helmut, 84524 Neuötting (DE); Stadler, Ludwig, 84453 Mühldorf (DE)
(74) Vertreter: LS-MP von Puttkamer Berngruber Loth Spuhler

(56) Entgegenhaltungen:
- EP-A1- 3 015 697
- DE-B1- 1 526 831
- FR-A- 1 351 422
- FR-A1- 2 448 636
- FR-A1- 2 964 705

## Beschreibung

Die Erfindung betrifft einen Flugkörper mit einem Flugtriebwerk und mit wenigstens einem Ausstosstriebwerk zur Erzeugung eines Startschubs zum Antrieb des Flugtriebwerks in der Startphase nach dem Oberbegriff des Anspruchs 1.

Sie bezieht sich nicht zuletzt auf eine derartige Vorrichtung für schultergestützte Waffen.

Ein Flugtriebwerk und ein Ausstosstriebwerk sind Teil eines Flugkörpers. Ein Flugköper, wie er der vorliegenden Erfindung zu Grunde liegt, umfasst im Wesentlichen einen Seeker, d.h. eine optische Sucheinheit, einen Warhead, d.h. einen sogenannten Gefechtskopf, sowie ein Flugtriebwerk und ein Ausstosstriebwerk. Der Flugkörper wird in einer Ausstossvorrichtung beschleunigt.

Ausstossvorrichtungen, nachfolgend auch Startvorrichtungen genannt, für Triebwerke gleich welcher Art, insbesondere in der Ausgestaltung von Abschussvorrichtungen für raketenartige Flugkörper, nehmen häufig ein Ausstosstriebwerk, auch Starttriebwerk genannt, und ein sogenanntes Haupttriebwerk, auch Marschtriebwerk oder - nachfolgend bevorzugt - Flugtriebwerk genannt, als Teil des Flugkörpers auf.

Das Haupttriebwerk wird von einem Ausstosstriebwerk beschleunigt und mittels einer Vorrichtung, z.B. eines Verzögerungszünders, erst dann gezündet, wenn es sich mit dem Gefechtskopf nach dem Ausstossen einer für den Schützen ungefährlichen Entfernung ausserhalb der Ausstossvorrichtung befindet. Das Haupttriebwerk wird dabei je nach Flugkörper gemäß dem Stand der Technik a von dem Ausstosstriebwerk getrennt.

Aus der DD 301 649 A7 ist eine Panzerabwehrrakete zur Bekämpfung von gepanzerten Fahrzeugen bekannt.

Die Panzerabwehrrakete umfasst je ein Ausstosstriebwerk und ein Marschtriebwerk auf. Zwischen beiden Triebwerken ist eine Trennwand angeordnet.

Die Trennwand weist mehrere Schubdüsen auf, die gleichzeitig Verzögerungssätze für die Treibladung des Marschtriebwerks aufnehmen.

Die deutsche Auslegeschrift DE 1 526 831 beschreibt einen kombinierten Raketenantrieb mit festen Treibstoffkörpern, die als Dualschubkörper in Tandemanordnung für den Startantrieb und den Bahnantrieb ausgestaltet sind und die voneinander getrennt und axial angeordnet sind, wobei der Startantrieb als sog. Sterninnenbrenner ausgebildet ist.

Das französische Patentdokument FR 2 448 636 beschreibt ein Flugtriebwerk mit einem Brennkammerkörper, der aus zwei hintereinander angeordneten Kammern besteht. Diese Druckschrift verweist dabei auf eine weitere französische Patentdruckschrift FR 1 351 422, bei der die Brennkammer des Flugtriebwerks eine Schutzverkleidung aufweist.

Zudem ist in der französischen Patentschrift FR 2 964 705 ein Flugtriebwerk mit einem Ausstoßtriebwerk zur Erzeugung eines Startschubs des Flugkörpers mit einer dem Ausstoßtriebwerk zugeordneten Brennkammer und mit dem Ausstoßtriebwerk zugeordneten Düsen beschrieben.

Bekannte Ausstosstriebwerke erweisen sich als nachteilig, da sie nach erfolgter Zündung und nach erfolgtem Start des Flugtriebwerks aus der Startvorrichtung ausgestoßen werden und im Umfeld vor der Startvorrichtung auf den Boden fallen. Dies hat zur Folge, dass die Startvorrichtung über das ausgestoßene Ausstosstriebwerk z.B. durch Lichtsensoren oder Wärmesensoren geortet werden kann.

Ein weiterer Nachteil liegt darin, dass der aus der Startvorrichtung herausgestoßene Treibsatz im großen Umfang Wärmeenergie ausstrahlt, die zu Verletzungen bei umstehenden Personen sowie beim Bediener selbst führen kann. Bewuchsmaterial auf dem Boden kann sich entzünden und zu einem Flächenbrand ausweiten, was ebenfalls zur Entdeckung der Startvorrichtung führen kann.

Des Weiteren kann ein Ausstoss und Aufschlagen des Treibsatzes im Bereich vor dem Bediener zur Freisetzung von Schadstoffen führen, die den Bediener der Startvorrichtung verletzen oder anderweitig beeinträchtigen können.

Deshalb wäre es an sich wünschenswert, wenn das Ausstosstriebwerk ein sogenanntes mitfliegendes Triebwerk, das nach dem Ausstoss mit dem Flugtriebwerk mitfliegt, wäre. Ein solches mitfliegendes Triebwerk ist in der älteren Patentanmeldung DE 10 2014 115 721.4 der Anmelderin beschrieben.

Damit ist jedoch angesichts des bisherigen Standes der Technik derartiger Flugkörper eine Konstruktion dergestalt verbunden, dass in einem solchen Fall der Gasstrahl beim Haupttriebwerk seitlich aus dem Flugkörper geführt werden muss. Dies setzt - meistens vier - schräggestellte Düsen im Inneren des Flugkörpers voraus, die einen zusätzlichen Platzbedarf schaffen, weil sie - in Flugrichtung betrachtet - hinter der Brennkammer des Flugtriebwerks und vor dem Ausstosstriebwerk angeordnet sind.

Vor allem aber geht damit eine ganz erhebliche Leistungsreduzierung einher, was insbesondere Auswirkungen bei schultergestützten Raketen - aber natürlich auch bei Flugkörpern ganz allgemein - nach sich zieht. Durch die schräggestellte Anordnung der Düsen und das Abstrahlen des Gases in dieser Schrägstellung verliert man Wirkungsgrad. Durch das seitliche Abstrahlen erhält man immer eine nach aussen gerichtete Antriebskomponente statt eine auf die Flugrichtung gerichtete Antriebskomponente. Um diesen Nachteil zu kompensieren, muss entweder insbesondere eine Reichweitenreduzierung oder eine Vergrösserung des Gewichts und / oder der Abmessungen des Flugkörpers in Kauf genommen werden.

Dabei darf nicht ausser Betracht gelassen werden, dass die dem Ausstosstriebwerk zugrundeliegende Schubanforderung direkt proportional zur einsetzbaren Brennstoffmasse ist und Flugkörper per se sehr stark volumenlimitiert sind.

Die bisherigen Triebwerkskonstruktionen sind überdies sehr aufwändig in der Konstruktion und umfassen sehr viele Bauteile, was sehr nachteilig ist.

So werden bei den konventionellen Triebwerkskonstruktionen die jeweils verwendeten Brennkammern in ein nicht druckbelastetes Rohr eingeschoben. Ein solcher Einschub findet auch bei demjenigen aus Patentschriften bekannten Stand der Technik statt, bei denen in den reine Prinzipskizzen darstellenden Figuren keine zeichnerisch eindeutige Trennung zwischen der Aussenhülle des Flugkörpers und der Wandung der in den Flugkörper eingeschobenen Brennkammer zu erkennen ist. Dabei wird regelmäßig ein Abstand zwischen der Ummantelung der Brennkammer und dem nicht druckbelasteten Außenrohr des Flugtriebwerks vorgesehen. Dies bedeutet nicht nur eine damit einher gehende Erhöhung des Gesamtgewichts einer derartigen Triebwerkkonstruktion sondern auch eine Reduzierung des Volumens des jeweiligen in der Brennkammer zur Verfügung stehenden Treibstoffes. Diese Reduzierung des Treibstoffvolumens hat eine Reichweitenverkürzung zur Folge. Darüber hinaus ist dieses Design kostenträchtig.

Die Erfindung stellt sich daher die Aufgabe, eine Startvorrichtung bereitzustellen, die die genannten Nachteile eines vor dem Bedieners auf dem Boden aufschlagenden Triebwerkes vermeidet und somit eine Detektierbarkeit der Startvorrichtung oder eine Verletzung oder Beeinträchtigung des Bedieners oder anderer Personen in seinem Umfeld umgeht.

Gleichzeitig soll ein Flugkörper mit einem mitfliegenden Ausstosstriebwerk geschaffen werden, bei dem die insbesondere aufgrund der schräggestellten Düsen auftretenden Leistungsverluste vermieden werden.

Des Weiteren soll die Masse der beschleunigten Teile reduziert werden.

Gleichzeitig soll die Teileanzahl reduziert werden.

Die Aufgabe wird gelöst durch einen Flugkörper nach Anspruch 1. Vorteilhafte Ausgestaltungen finden sich in den Unteransprüchen.

Das Ausstosstriebwerk zur Erzeugung des Startschubs ist auch während des Flugs des Flugtriebwerks, auch Flugkörper genannt, mit diesem verbunden.

In einer besonders bevorzugten Ausgestaltung stellt die Flugkörperstruktur zugleich die druckbeaufschlagte Brennkammer dar.

Die Erfindung versteht unter dem Begriff Flugkörper ein technisches Gerät, das geeignet ist, in einem Luftraum zu fliegen. Der Flugkörper enthält ein Flugtriebwerk und ein Ausstosstriebwerk.

Erfindungsgemäß bewirkt das wenigstens eine Flugtriebwerk den Schub für den Flug des Geräts.

Das Flugtriebwerk führt hierzu in an sich herkömmlicher Weise den Schub der Düse zu.

Flugkörper können z.B. Raketen, Drohnen oder ähnliche unbemannte Geräte sein, gleichgültig ob beispielsweise feststoffangetrieben, flüssig- oder gelstoff- oder gasangetrieben.

Flugkörper werden sowohl für zivile als auch für militärische Zwecke eingesetzt. Die zivile Nutzung ist vorzugsweise kommerzieller Natur und dient z.B. der Telekommunikation oder wissenschaftlichen Aufgaben.

Andererseits werden Flugkörper besonders bevorzugt für militärische Zwecke eingesetzt. Hierbei eignen sich insbesondere Raketen z.B. als taktische oder als strategische Waffen.

Der Flugkörper kann z.B. ein Lenkflugtriebwerk sein und als Waffensystem ausgebildet sein. Der Flugkörper kann in gleicher Weise Kommunikations- und/oder Aufklärungszwecken dienen.

Der Flugkörper erfüllt alternativ auch andere Aufgaben. Dabei weist der Flugkörper ein Flugtriebwerk auf, das als Marschflugtriebwerk ausgebildet ist, das über eine eigene Steuerungseinheit verfügt. Mit Hilfe der Steuerungseinheit ist das Marschflugtriebwerk während des gesamten Fluges kontrollierbar und lenkbar.

In einer anderen Ausführungsform ist der Flugkörper ein ballistisches Flugtriebwerk, das nach dem Start nicht mehr beeinflussbar ist.

Nach einer kurzen Beschleunigung in der Startphase erreicht das ballistische Flugtriebwerk sein Ziel ohne weiteren Antrieb auf einer elliptischen Flugbahn, die den Regeln der Ballistik folgt.

Die Startphase bezeichnet die Phase, in der der Flugkörper mitsamt dem Flugtriebwerk aus dem Stand beschleunigt und sich vorzugsweise von einer Führungseinrichtung löst.

Bei der Führungseinrichtung kann es sich um eine Ausstossvorrichtung, insbesondere um eine Abschussvorrichtung handeln.

In und/oder während der Startphase des Flugkörpers ist dieser vorzugsweise in einer Führungseinrichtung führbar.

Die Führungseinrichtung kann ein rohrförmiger Profilkörper sein.

Das Rohrprofil weist eine umlaufende, geschlossene Seitenwand auf.

Alternativ ist es auch denkbar, dass die Führungseinrichtung ein an seiner Seitenwand offenes Rohrprofil ist.

Zur Führung des Flugtriebwerks in der Startphase ist das Flugtriebwerk in die Führungseinrichtung einführbar.

Darüber hinaus ist es ebenfalls vorstellbar, dass die Führungseinrichtung eine Nut umfasst, in die das Flugtriebwerk mit einer Einrichtung zur Aufnahme des Startschubs eingreift.

Mit dem Abheben beginnt das Flugtriebwerk je nach Bau- oder Nutzungsart zu fliegen oder zu schweben.

Beim Abheben vorzugsweise aus einer Führungseinrichtung überwindet das Flugtriebwerk die Gewichtskraft. In der Startphase muss die Auftriebskraft stärker sein als die Gewichtskraft des Flugtriebwerks. Aus diesem Grund ist die Startart des Flugtriebwerks bauartbedingt und nutzlastbedingt unterschiedlich.

Das Flugtriebwerk entzündet vorzugsweise flüssige oder feste Brennstoffe, die im Flugtriebwerk angeordnet sind um die erforderliche Rückstoßkraft hervorzubringen, mit der sich der Flugtriebwerk fortbewegt.

Zur Gewinnung der Rückstoßkraft verfügt der Flugtriebwerk vorzugsweise über ein Ausstosstriebwerk, das wenigstens einen Treibsatz umfasst.

Zum Start des Flugtriebwerks kann eine Startvorrichtung, z.B. eine Abschussvorrichtung, vorgesehen sein.

Die Startvorrichtung kann schultergestützt auf einem Schützen oder auf einem Fahrzeug, Schiff, Flugzeugen oder sonstigen bewegbaren Vorrichtungen oder stationär angeordnet sein.

Die Startvorrichtung ist eine transportable oder fest installierte Vorrichtung, die das Flugtriebwerk bis kurz vor seinem Start aufnimmt.

Die Startvorrichtung umfasst vorzugsweise Versorgungsleitungen und Messkabel, mit denen das Flugtriebwerk verbindbar ist, und die vor dem Start abtrennbar sind.

Die Startvorrichtung dient der möglichst schnellen Beschleunigung des Flugtriebwerks.

Die Startvorrichtung kann eine zylindrische oder rohrförmige oder eine andere geometrische Form aufweisende Führungseinrichtung aufweisen.

Die Führungseinrichtung weist vorzugsweise eine umlaufende Seitenwand auf.

Aus einer Hauptdüse des Flugtriebwerks tritt das Schubgas aus.

Die Führungseinrichtung der Startvorrichtung ist an ihren beiden Stirnseiten offen, so dass das aus der Hauptdüse des Flugtriebwerks austretende Schubgas beim Start des Flugtriebwerks an der rückwärtigen Stirnseite der Startvorrichtung aus dieser entweichen kann.

Das Flugtriebwerk weist neben dem für den eigentlichen Flug erforderlichen Triebwerk ein Ausstosstriebwerk, auch Starttriebwerk genannt, zum Start sowie zur Beschleunigung des Flugtriebwerks auf.

Das Ausstosstriebwerk und das Flugtriebwerk können in Bezug auf den Flugkörper axial oder radial zueinander angeordnet sein.

Erfindungsgemäß wird im Ausstosstriebwerk des Flugtriebwerks zur Einleitung der Startphase des Flugtriebwerks der Treibsatz gezündet.

Das Ausstosstriebwerk ist im Inneren des Flugtriebwerks angeordnet und erzeugt während der Startphase des Flugtriebwerks das Antriebsgas, das zur Bereitstellung der erforderlichen Rückstosskraft aufgebracht werden muss.

Das Ausstosstriebwerk wirkt auf wenigstens eine Düse ein, die auf das Flugtriebwerk wirkt und dieses beschleunigt und antreibt.

Erfindungsgemäß erfasst das wenigstens eine Ausstosstriebwerk wenigstens eine Ring-Brennkammer, in der ein Treibsatz mit seinem Treibstoff angeordnet ist.

Mit Zündung des Treibsatzes des Ausstosstriebwerks entsteht in der Ring-Brennkammer ein Verbrennungsgas, das durch mit der Ring-Brennkammer verbundene Düsen entweicht und auf diese Weise das Flugtriebwerk beschleunigt.

Das Ausstosstriebwerk liefert in kürzester Zeit die meiste Energie, weshalb es Düsen mit einem angepassten Abströmquerschnitt zur Erfüllung dieser Aufgabe bedarf.

Es ist bevorzugt, dass dem wenigstens einen Flugtriebwerk wenigstens eine separate Düse zum Austrieb des Antriebsgases zugeordnet ist.

Nach Beendigung der Startphase ist das Ausstosstriebwerk abschaltbar oder seine Funktion endet z.B. aufgrund des Aufbrauchens des Treibstoffes, automatisch.

Die Erzeugung des für den Flug des Flugtriebwerks erforderlichen Antriebsgases erfolgt vorzugsweise im Flugtriebwerk selbst.

Selbiges gilt für den Treibsatz des Ausstosstriebwerks.

Ein Treibsatz ist eine Treibladung, die insbesondere einen Satz von chemischen Substanzen in fester, flüssiger, viskoser oder gasförmiger Form umfasst.

Der Treibsatz ist ein Energieträger, der bei der Aktivierung der chemischen Substanzen ein großes Volumen anstrebt, und auf diese Weise in der Lage ist, ein Objekt, insbesondere einen Flugtriebwerk zu bewegen. Der Treibsatz ist der Treibstoff für das Ausstosstriebwerk.

Der Treibsatz hat die Aufgabe, ein lenkbares oder nicht lenkbares Flugtriebwerk durch die Erzeugung von Schubgas mittels des Ausstosstriebwerks zu beschleunigen und aus der Startvorrichtung heraus anzutreiben.

Nach der Zündung brennt der Treibsatz ab und erzeugt das Schubgas in Form der entstandenen Verbrennungsgase. Zur Erhöhung des Drucks kann das Schubgas zusätzlich komprimiert werden.

Treibsätze können insbesondere nitrocellulose Pulver oder Schwarzpulver umfassen. Es versteht sich von selbst, dass der erfindungsgemäße Treibsatz darüber hinaus andere, den Startschub bewirkende feste, flüssige, viskose oder gasförmige Stoffe umfasst.

Die Düse bezeichnet eine vorzugsweise röhrenförmige technische Einrichtung. Der Flächeninhalt der technischen Einrichtung ist auf seiner gesamten Länge gleich, oder erweitert oder verjüngt. Darüber hinaus kann er jede denkbare komplexe Form aufweisen.

Die Düse bewirkt eine Umlenkung eines Schubgas- oder Flüssigkeitsstroms. Sie wandelt Druck in Bewegungsenergie um oder verteilt flüssige oder gasförmige Substanzen gleichmäßig im Inneren der Düse.

Im Inneren der Düse kann je nach Bedarf eine Strömung mit Unterschallgeschwindigkeit oder mit Überschallgeschwindigkeit fließen.

Erfindungsgemäss wird zur Erfüllung der eingangs erwähnten Aufgabenstellungen ein Ausstosstriebwerk geschaffen, das eine Ringbrennkammer umfasst.

Im Ausstosstriebwerk des Flugtriebwerks wird zur Einleitung der Startphase des Flugtriebwerks der Treibsatz gezündet.

Das Ausstosstriebwerk ist im Inneren des Flugtriebwerks angeordnet und erzeugt während der Startphase des Flugkörpers das Antriebsgas, das zur Bereitstellung der erforderlichen Rückstosskraft aufgebracht werden muss.

Zu diesem Zweck weist es eine erfindungsgemäß in Ringform ausgetaltete Brennkammer auf.

Die in der Ringbrennkammer infolge des Abbrands des Treibstoffs des Ausstosstriebwerks entstehenden Gase wirken auf ringförmig angeordnete Düsen ein, die auf den Flugkörper in der Startphase wirken und diesen beschleunigen und antreiben.

Die wenigstens eine Ringbrennkammer des Austosstriebwerks enthält die unten näher beschriebene Treibstoffanordnung.

In einer besonders bevorzugten Ausgestaltung stellt die Aussenwandung des Flugkörpers im Bereich der Lokalistion der Brennkammer zugleich die Aussenwand der Brennkammer dar, die zu diesem Zweck ein druckbeaufschlagtes Material aufweist.

Mit Zündung des Treibsatzes des Ausstosstriebwerks entsteht in der Brennkammer des Ausstosstriebwerks ein Verbrennungsgas, das durch die mit der Brennkammer verbundenen Düsen entweicht und auf diese Weise den Flugkörper beschleunigt.

Das Ausstosstriebwerk liefert in kürzester Zeit die meiste Energie, weshalb es Düsen mit einem angepassten Abströmquerschnitt zur Erfüllung dieser Aufgabe bedarf.

Es ist bevorzugt, dass dem wenigstens einen Ausstosstriebwerk und dem wenigstens einen Flugtriebwerk jeweils wenigstens eine separate Düse(n) zum Austrieb des Antriebsgases zugeordnet ist (sind).

Nach Beendigung der Startphase ist das Ausstosstriebwerk abschaltbar oder seine Funktion endet z.B. aufgrund des Aufbrauchens des Treibstoffes, automatisch.

Die Erzeugung des für den Flug des Flugtriebwerks erforderlichen Antriebsgases erfolgt vorzugsweise im Flugtriebwerk selbst.

Selbiges gilt für den Treibsatz des Ausstosstriebwerks.

Ein Treibsatz ist eine Treibladung, die insbesondere einen Satz von chemischen Substanzen in fester, flüssiger, viskoser oder gasförmiger Form umfasst.

Der Treibsatz ist ein Energieträger, der bei der Aktivierung der chemischen Substanzen ein großes Volumen anstrebt, und auf diese Weise in der Lage ist, ein Objekt, insbesondere einen Flugkörper zu bewegen. Der Treibsatz ist der Treibstoff sowohl für das Flugtriebwerk wie für das Ausstosstriebwerk.

Treibsatz und Treibstoff werden also vorliegend als Synonyme verwendet.

Der Treibsatz hat die Aufgabe, ein lenkbares oder nicht lenkbares Flugtriebwerk durch die Erzeugung von Schubgas mittels des Ausstosstriebwerks zu beschleunigen und aus der Startvorrichtung heraus anzutreiben.

Nach der Zündung brennt der Treibsatz ab und erzeugt das Schubgas in Form der entstandenen Verbrennungsgase. Zur Erhöhung des Drucks kann das Schubgas zusätzlich komprimiert werden.

Erfindungsgemäss wird zur Erfüllung der eingangs erwähnten Aufgabenstellungen ein Ausstosstriebwerk geschaffen, das eine Ringbrennkammer umfasst.

Dadurch erfolgt die Gasausförderung des Gases des Flugtriebwerks über ein Gasleitrohr, das durch das Zentrum der Ringbrennkammer geführt ist.

Das die Ringbrennkammer umfassende Ausstosstriebwerk ist - in Flugrichtung betrachtet - hinter der Brennkammer des Flugtriebwerks angeordnet. Der Abstand zwischen beiden Brennkammern richtet sich nach Flugkörpertyp, Einsatzzweck, nach den im allgemeinen zur Verfügung stehenden Platzverhältnissen etc.

Die Brennkammer des Flugtriebwerks nimmt den Treibsatz für das Flugtriebwerk auf.

An ihrem - in Flugrichtung betrachtet - Ende geht die Brennkammer des Flugtriebwerks in ein Gasleitrohr über, über das die in dieser Brennkammer erzeugten Verbrennungsgase ausgefördert und einer Düse zugeführt werden.

Das Gasleitrohr ist dabei in axialer Richtung vorzugsweise mittig zu dem Flugkörper angeordnet.

Es verläuft dabei entlang dem Ruderstellsystem und danach - wieder in Flugrichtung betrachtet - durch das Zentrum des die Ringbrennkammer umfassenden Ausstosstriebwerks. An seinem Ende des Gasleitrohrs ist die Düse für das Flugtriebwerk angeordnet.

Die Anordnung der Ringbrennkammer um das Gasleitrohr herum ermöglicht es also, dass das Flugtriebwerksgas auf direktem und kurzem Weg durch das Ausstosstriebwerk nach hinten ausströmen und den Flugkörper in der Marschphase antreiben kann.

Dadurch werden Leistungsverluste vermieden und eine extrem kompakte Bauweise ermöglicht, da es der im Stand der Technik eingesetzten schräg gestellten Düsen nicht mehr bedarf.

Die Ringbrennkammer des Ausstosstriebwerks nimmt den Treibsatz für das Ausstosstriebwerk auf.

Die Ringbrennkammer ist vorzugsweise als ein 360° umlaufendes Bauteil ausgestaltet.

Es kann jedoch aus mehreren Segmenten bestehen, die zu einer solchen Ausgestaltung einer Ringbrennkammer zusammengesetzt werden.

An die Ringbrennkammer - in Flugrichtung betrachtet -anschliessend ist eine erforderliche Anzahl von Düsen zur Ausförderung der dort nach Zündung entstehenden Verbrennungsgase vorgesehen. Die Anzahl und Ausgestaltung der Düsen richten sich nach jeweiligem Einsatzzweck der Flugkörper.

Diese Düsen sind entsprechend der ringförmigen Ausgestaltung der Brennkammer ebenfalls ringförmig angeordnet.

Ob sich diese Düsen baulich unmittelbar an das - in Flugrichtung betrachtet - Ende der Ringbrennkammer anschliessen oder ob zwischen Ringbrennkammer ein räumlicher Abstand liegt oder in einem solchen Fall zwischen Ringbrennkammer und Düsen jeweils ein Gasleitrohr angeordnet ist, richtet sich nach Flugkörpertyp, Einsatzzweck, nach den im allgemeinen zur Verfügung stehenden Platzverhältnissen etc.

Die Anzünder für das Ausstosstriebwerk und das Flugtriebwerk sind vorzugsweise jeweils in räumlicher Nähe zu diesen Triebwerken angeordnet.

Entsprechend ihrer jeweiligen unterschiedlichen Funktion werden beide Anzünder in definierter Weise zu unterschiedlichen Zeitpunkten gezündet. Der Anzünder des ausstosstriebwerks wird zuerst gezündet. Die Zündzeitpunkte können je nach Flügkörpertyp in Bruchteilen einer Sekunde differieren, aber auch länger auseinanderliegen.

In Flugrichtung betrachtet zwischen Brennkammer des Flugtriebwerks und Ringbrennkammer des Ausstosstriebwerks kann das Ruderstellsystem für das Flugtriebwerk mit den ausserhalb der Hülle des Flugkörpers angeordneten Aktuatoren, d.h. den Lenkrudern, vorgesehen sein.

Baustoffmässig können für die Triebwerke gleichartige oder identische Materialien eingesetzt werden, wie sie im Stand der Technik hinlänglich bekannt sind.

Die Aussenhülle eines oder beider Triebwerke kann in einer bevorzugten Ausführungsform konstruktiv identisch mit derjenigen des Flugkörpers, d.h. dem sogenannten Air Frame, sein.

Vorteilhafterweise ist die Aussenhülle des Flugkörpers im räumlichen Bereich der Brennkammer des Flugtriebwerks dasselbe Bauteil wie die Aussenwandung der Brennkammer des Flugtriebwerks.

Die Aussenhülle des Flugkörpers im räumlichen Bereich der Brennkammer des Ausstosstriebwerks ist dasselbe Bauteil wie die Aussenwandung der Brennkammer des Ausstosstriebwerks.

Diese besonders vorteilhafte Ausgestaltung der Erfindung ermöglicht, die Aussenhülle der Brennkammer des einen und/oder des anderen Triebwerks von den Flug- bzw. Ausstosstriebwerken nicht in den Air Frame einschieben zu müssen, sondern die Aussenhülle der Brennkammer des einen und/oder des anderen Triebwerks und des Air Frame als ein einheitliches Bauteil auszugestalten. Hierdurch wird eine kostengünstige, gewichtsparende, raumsparende Ausgestaltung ermöglicht.

Soweit dies nachfolgend näher erläutert wird und allgemein von der Brennkammer gesprochen wird, bezieht sich dies - soweit nicht ausdrücklich etwas anderes erwähnt wird - sowohl auf den Brennkammer-Typus einer Brennkammer des Flugtriebwerks und einer Brennkammer des Ausstosstrriebwerks.

Bei dieser besonders vorteilhaften erfindungsgemäßen Ausgestaltung der Flugkörperstruktur kann auf ein Einschieben einer Brennkammer, häufig in Form eines Brennkammerrohres, in das Innere des Flugkörpers, wie dies beim Stand der Technik gehandhabt wird, verzichtet werden.

In diesem Zusammenhang ist darauf hinzuweisen, dass in manchen Patentdokumenten Figurendarstellungen enthalten sind, die für die Wandung einer Brennkammer und die Wandung des Air Frame eine einzige gezeichnete Strich-Linie verwendet wird. Der Fachmann weiss aber, dass es sich hierbei lediglich um eine zeichnerisch vereinfachende Darstellung handelt und es sich tatsächlich um zwei unterschiedliche Wandungen handelt, nämlich um eine für die Brennkammer und um eine für den Air Frame. Wie dargelegt, gehört es bis heute zur durchgängigen Konstruktion derartiger Flugkörper, Brennkammer und Air Frame als gesonderte Bauteile vorzusehen. Dies gilt umso mehr, als in den zugehörigen Beschreibungen der Patentdokumente eine einteilige Bauweise nicht angesprochen ist.

Nach dieser vorteilhaften Ausgestaltung der Erfindung erfolgt mithin kein Einschub (jedenfalls) einer Brennkammer mehr in ein nicht druckbelastetes Rohr, insbesondere die Aussenhülle des Flugkörpers. Die Aussenwandung des Flugkörpers wird so ausgestaltet, dass sie zugleich die Brennkammer darstellt. Ganz besonders bevorzugt ist es, wenn das Material der Brennkammer druckbeaufschlagt ist.

Dabei versteht sich von selbst, dass dies vorzugsweise nur in dem Bereich des Flugkörpers erfolgt, in dem sich der Treibstoff für die Brennkammer befindet.

Vorzugsweise wird mithin der Flugkörper in dem Bereich der Brennkammer materialmäßig so stabil ausgeführt, dass man zumindest diesen Bereich des Flugkörpers mit Treibstoff befüllen kann, ohne ein gesondertes Bauteil, z.B. in Form einer zweiten Wandung, vorsehen zu müssen.

Es bedarf aus diesem Grunde nur der Anordnung einer oder zweier Trennwände, also eines Art Deckels und Bodens, an geeigneter Stelle innerhalb des Flugkörpers, um das Volumen des Treibstoffs auf das gewünschte Maß zu reduzieren. Die Brennkammer des Flugriebwerks umfasst also in Längsrichtung des Flugtriebwerks auf beiden Seiten eine Trennwand, vorzugsweise einen Brennkammer-Deckel und einen Brennkammer-Heckboden mit Gasleitrohr, um die Brennkammer gegenüber dem weiteren Innenraum des Flugtriebwerks oder des Flugkörpers abzugrenzen.

Je nach Umfang und Größe des in der Brennkammer angeordneten Flugtreibsatzes kann der Brennkammer-Deckel und/oder der Brennkammer-Heckboden in und/oder entgegen der Flugrichtung des Flugtriebwerks verschoben und an der axialen Seite der Innenwandung der Brennkammer oder ausserhalb der Brennkammer and der Innenwandung des Flugkörpers in einer im Belieben des Fachmanns liegenden Weise befestigt werden.

Vorzugsweise sind der Brennkammer-Deckel und/oder der Brennkammer-Heckboden gegenüber der Innenwand der Flugtriebwerkhülle druckdicht eingepresst oder mit der Hülle des Flugtriebwerks oder des Flugkörpers verschweißt.

Die axial verlaufende Innenwand der Brennkammer, die den Brennkammer-Deckel mit dem Brennkammer-Heckboden verbindet, ist also in der bevorzugten Ausführungsform die Innenwand der Flugkörperhülle.

Es ist zusätzlich möglich, den in der Brennkammer angeordneten Treibsatz durch eine Isolierung gegenüber der Flugkörperhülle oder der Innenwandung der Brennkammer, falls diese nicht identisch sind, abzugrenzen.

Die Isolierung legt sich auf der Innenseite der Aussenwandung des Flugkörpers oder dichtend an die Wandung der Hülle des Flugtriebwerks an.

Vorzugsweise ist zumindest der die Brennkammer umfassende Bereich der Flugkörperstruktur aus einem Stahlwerkstoff, dessen Zusammensetzung nach den gewünschten Einsatzbedingungen des Flugtriebwerks ausgewählt werden kann. Selbstverständlich sind auch andere geeignete Materialien verwendbar.

Die äußere Ummantelung des Flugkörpers um die Brennkammer des Flugtriebwerks und/oder des Ausstosstriebwerks ist deshalb im Bereich der Brennkammer vorzugsweise materialeinheitlich ausgestaltet.

Es ist aber auch möglich, die Aussenummantelung der Hülle des Flugkörpers und die Innenummantelung der Hülle des Flugköpers, die gleichzeitig die Brennkammer des Flugtriebwerks und/oder des Ausstosstriebwerks begrenzt, sandwichartig, insbesondere unter Einsatzes unterschiedlicher Materialien auszugestalten.

Das Vorstehende zur Ausgestaltung der Brennkammer gilt, wie dargelegt, auch für die Ringbrennkammer des Ausstosstriebwerks mit Ausnahme, dass von diesem nicht notwendigerweise ein eigenes Gasleitrohr von einem Brennkammer-Heckboden ausgeht. Vielmehr verläuft das Gasleitrohr des Flugtriebwerks axial vorzugsweise mittig durch die Ringbrennkammer.

Durch diese kombinatorische Ausgestaltung des Flugkörpers werden die genannten Ziele effektiv erreicht.

Durch das Mitführen des Ausstosstriebwerkes auch während des Fluges des Flugtriebwerkes wird insbesondere die thermale Detektierbarkeit insbesondere der Ausstossvorrichtung reduziert. Der damit an sich einhergehende prinzipielle Nachteil, dass die Flugkörperstruktur auch im Fluge die Masse des eigentlichen Flugtriebwerks und die Masse des Ausstosstriebwerks aufnehmen muss, wird mehr als überkompensiert dadurch, dass in der besonders bevorzugten Ausführungsform die Aussenhülle des Flugkörpers zumindest partiell zugleich die - besonders bevorzugt druckbeaufschlagte - Brennkammer darstellt.

Hinzu kommen die vorgeschilderten Effekte aufgrund der besonderen Ausgestaltung einer Ringbrennkammer für das Ausstosstriebwerk mit im Zentrum desselben geführten Gasleitrohr des Flugtriebwerks.

Hierbei zeigen:
Fig. 1 den Ausschnitt eines Flugtriebwerks mit Start-Ausstosstriebwerk und zugehörigen Antriebsdüsen.
Fig. 2 denselben Ausschnitt eines Flugtriebwerks mit Start-Ausstosstriebwerk und zugehörigen Antriebsdüsen mit materialeinheitlicher Ausgestaltung des Air Frame und der Aussenhülle des Flugtriebwerks sowie des Ausstosstriebwerks.

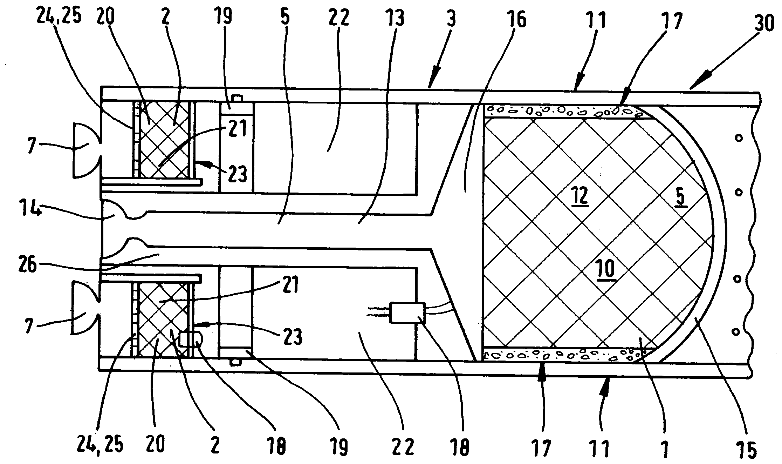

Fig. 1 zeigt ein Flugtriebwerk 3 eines Flugkörpers 30 mit einer Hülle 11 sowie ein Ausstosstriebwerk 2.

Das Ausstosstriebwerk 2 umfasst eine 360° umlaufende Ringbrennkammer 20.

Weiter sind stirnseitig angeordneten Düsen 7 und 14 dargestellt.

Die Düsen 7 sind dem eine Ringbrennkammer 20 umfassenden Ausstosstriebwerk 2 zugeordnet und werden deshalb auch als Startdüsen bezeichnet.

Die Düse 14 ist dem Gasleitrohr 13 des Flugtriebwerks 3 zugeordnet.

Das Gasleitrohr 13 wird achsial im Wesentlichen mittig zu dem Flugtreibwerk 3 geführt und durchläuft das in dieser Ausführungsform offene Zentrum 26 der Ringbrennkammer 20. Es endet in der Düse 14.

An der von den Düsen 7 abgewandten Stirnseite des Ausschnitts des Flugtriebwerks 3 ist eine Brennkammer 1 dargestellt, in der Treibsatz 10 angeordnet ist. Der Treibsatz 10 enthält einen Brennstoff 12, der nach der Zündung zu einem Antriebsgas 5 verbrennt.

Das Antriebsgas 5 wird einem Gasleitrohr 13 zugeführt, das das Antriebsgas 5 einer Düse 14 zuführt.

Die Brennkammer 1 weist an ihrer von der Düse 14 abgewandten Stirnseite einen Brennkammerboden 15 auf.

An der Stirnseite der Brennkammer 1, die der Düse 14 zugeordnet ist, ist ein Heckboden 16 angeordnet, der trichterförmig in die Hauptleitung 13 übergeht, die als Gasleitrohr ausgebildet ist. Vorzugsweise bildet der Heckboden 16 einen Abschnitt der Hauptleitung 13 aus.

Gegenüber der Hülle 11 des Flugtriebwerks 3 ist der Treibsatz 10 in der Brennkammer 1 durch eine Isolierung 17 von der Hülle 11 des Flugtriebwerks 3 abgegrenzt.

In Fig. 1 ist ein Anzünder 18 im Heckboden 16 vorgesehen, über den der Treibsatz 10 in der Brennkammer 1 gezündet wird.

Zwischen dem Heckboden 16 und der Hauptdüse 14 ist ein Verbindungsring 19 angeordnet.

Dem Verbindungsring 19 kommt die Funktion eines Ruder-Stell-Systems zu. Er ist dessen Träger. Der Innenraum 22 bietet dem Ruder-Stell-System Platz.

Zwischen dem Verbindungsring 19 und der Düse 14 ist im Inneren des Flugkörpers 30 ein eine Ringbrennkammer 20 umfassendes Ausstosstriebwerk 2 dargestellt.

Das eine Ringbrennkammer 20 umfassende Ausstosstriebwerk 2 enthält einen Start-Treibsatz 21, der den für die Startphase des Flugtriebwerks 3 erforderlichen Startschub erzeugt. Der Treibsatz 21 enthält einen Brennstoff, der nach der Zündung zu einem Antriebsgas 4 (nicht gezeigt) verbrennt, das der mindestens einen Düse 7 zugeführt wird.

Brennkammerseitig ist der Start-/Treibsatz 21 gegenüber dem Innenraum 22 des Flugtriebwerks 3 durch einen Verschluss 23 abgegrenzt.

Im Verschluss 23 ist der Anzünder 18 zur Zündung des Start-Treibsatzes 21 vorgesehen.

An der von der Brennkammer 1 abgewandten Stirnseite 24 des Start-Treibsatzes 21 ist in Fig. 1 eine Filterscheibe 25 vorgesehen.

Die Filterscheibe 25 filtert insbesondere Partikel und Schadstoffe aus dem Verbrennungsgas des Start-Treibsatzes 21 heraus und führt das Antriebsgas 4 für das Ausstosstriebwerk aus dem Start-Treibsatz 21, Start-Düsen 7 zu.

In der Darstellung Fig. 1 erstrecken sich die Düse 14 und die Startdüsen 7 innerhalb des Flugtriebwerks 3 achsparallel zueinander.

Der Start-Treibsatz 21 steht mit den Düsen 7 in Verbindung.

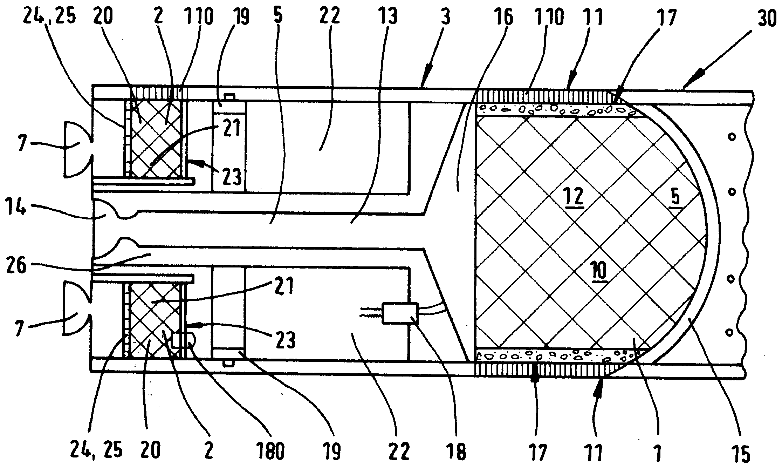

In Fig. 2 ist die dieselbe Ausgestaltung des Flugkörpers 30 wie in Fig. 1 gezeigt, mit dem Unterschied dass die Hülle 11 des Air Frame im Bereich der Hülle der Brennkammer 1 sowie der Rinbrennkammer 20 materialeinheitlich als Hülle 110 ausgestaltet ist. Aus Gründen der Übersichtlichkeit ist die Hülle 110 im Bereich der Ringbrennkammer nur auf einer Seite des Objekts gezeigt. Die Hülle 11, 110 stellt dabei in ihrer Längsausrichtung zumindest teilweise die druckbeaufschlagte Brennkammer 1 und /oder 20 dar.

### Bezugsziffern

- 1.: Brennkammer
- 2.: Ausstosstriebwerk
- 3.: Flugtriebwerk
- 4.: Antriebsgas für Ausstosstriebwerk
- 5.: Antriebsgas für Flugtriebwerk
- 6.: freibleibend
- 7.: Düse der Rinbrennkammer
- 8.: Führungseinrichtung
- 9.: Rohrprofil
- 10.: Treibsatz
- 11.: Hülle
- 12.: Brennstoff
- 13.: Gasleitrohr des Flugtriebwerks
- 14.: Düse der Brennkammer 1 zugeordnet
- 15.: Brennkammerboden
- 16.: Heckboden
- 17.: Isolierung
- 18.: Anzünder
- 19.: Verbindungsring
- 20.: Ringbrennkammer
- 21.: Starttreibsatz
- 22.: Innenraum
- 23.: Verschluss
- 24.: Stirnseite
- 25.: Filterscheibe
- 26.: Zentrum der Ringbrennkammer
- 30.: Flugkörper
- 110.: Hülle

## Patentansprüche

1. Flugkörper (30) umfassend ein Flugtriebwerk (3) mit einer Umhüllung (11, 110), mit wenigstes einer Brennkammer (1) des Flugtriebwerks (3) und mit wenigstens einem Ausstosstriebwerk (2) zur Erzeugung eines Startschubs des Flugtriebwerks (3) in einer Startphase, wobei das Ausstosstriebwerk (2) eine Ringbrennkammer (20) und ringförmig angeordnete Düsen (7) umfasst, **dadurch gekennzeichnet, dass** die Umhüllung (11, 110) des Flugtriebwerks (3) Teil der druckbeaufschlagten Ringbrennkammer (20) ist.

2. Flugkörper (30) nach Anspruch 1, **dadurch gekennzeichnet, dass** die Ringbrennkammer (20) 360° umlaufend ist.

3. Flugkörper (30) nach einem oder mehreren vorhergehenden Ansprüche **dadurch gekennzeichnet, dass** das Ausstosstriebwerk (2) während des Fluges mit dem Flugtriebwerk (3) verbunden ist.

4. Flugkörper (30) nach einem oder mehreren vorhergehenden Ansprüche **dadurch gekennzeichnet, dass** durch das Zentrum (26) der Ringbrennkammer (20) ein Gasleitrohr (13) der Brennkammer (1) läuft.

5. Flugkörper (30) nach Anspruch 4 **dadurch gekennzeichnet, dass** das Gasleitrohr (13) im Wesentlichen mittig im Inneren und parallel zur Längsachse des Flugkörpers (30) angeordnet ist.

6. Flugkörper (30) nach einem oder mehreren vorhergehenden Ansprüche **dadurch gekennzeichnet, dass** das Ausstosstriebwerk (2) wenigstens einen Treibsatz (21) aufweist.

7. Flugkörper (30) nach einem oder mehreren vorhergehenden Ansprüche **dadurch gekennzeichnet, dass** das Flugtriebwerk (3) wenigstens einen Triebsatz (10, 12) aufweist.

8. Flugkörper (30) nach einem oder mehreren vorhergehenden Ansprüche **dadurch gekennzeichnet, dass** das im Ausstosstriebwerk (2) erzeugte Antriebsgas (4) wenigstens einer Düse (7) zuführbar ist.

9. Flugkörper (30) nach einem oder mehreren vorhergehenden Ansprüche **dadurch gekennzeichnet, dass** die Umhüllung (11, 110) des Flugtriebwerks (3) Teil der druckbeaufschlagten Brennkammer (1) ist.

## Claims

1. Missile (30) comprising an aircraft engine (3) having a casing (11, 110), at least one combustion chamber (1) of the aircraft engine (3) and at least one ejection engine (2) for generating a take-off thrust of the aircraft engine (3) in a launch phase, wherein the ejection engine (2) comprises an annular combustion chamber (20) and annularly arranged nozzles (7), **characterized in that** the casing (11, 110) of the aircraft engine (3) is part of the pressurized annular combustion chamber (20).

2. Missile (30) according to claim 1, **characterized in that** the annular combustion chamber (20) has a circumference of 360 degrees.

3. Missile (30) according to one or more of the preceding claims, **characterized in that** the ejection engine (2) is connected to the aircraft engine (3) during flight.

4. Missile (30) according to one or more of the preceding claims, **characterized in that** a gas guide tube (13) of the combustion chamber (1) runs through the center (26) of the annular combustion chamber (20).

5. Missile (30) according to claim 4, **characterized in that** the gas guide tube (13) is arranged substantially centrally in the interior and parallel to the longitudinal axis of the missile (30).

6. Missile (30) according to one or more of the preceding claims, **characterized in that** the ejection engine (2) comprises at least one propellant charge (21).

7. Missile (30) according to one or more of the preceding claims, **characterized in that** the aircraft engine (3) has at least one propellant charge (10, 12).

8. Missile (30) according to one or more of the preceding claims, **characterized in that** the propellant gas (4) produced in the ejection engine (2) can be supplied to at least one nozzle (7).

9. Missile (30) according to one or more of the preceding claims, **characterized in that** the casing (11, 110) of the aircraft engine (3) is part of the pressurized combustion chamber (1).

## Revendications

1. Missile (30) comprenant un propulseur (3) comportant une enveloppe (11, 110), comportant au moins une chambre de combustion (1) du propulseur (3) et comportant au moins un système d'éjection (2) destiné à engendrer une poussée au décollage du propulseur (3) dans une phase de décollage, le système d'éjection (2) comprenant une chambre de combustion annulaire (20) et des tuyères (7) disposées en anneau, **caractérisé en ce que** l'enveloppe (11, 110) du propulseur (3) fait partie de la chambre de combustion annulaire (20) mise en pression.

2. Missile (30) selon la revendication 1, **caractérisé en ce que** la chambre de combustion annulaire (20) couvre 360°.

3. Missile (30) selon une ou plusieurs des revendications précédentes, **caractérisé en ce que** pendant le vol le système d'éjection (2) est raccordé au propulseur (3).

4. Missile (30) selon une ou plusieurs des revendications précédentes, **caractérisé en ce qu'**un conduit tubulaire de gaz (13) de la chambre de combustion (1) passe par le centre (26) de la chambre de combustion annulaire (20).

5. Missile (30) selon la revendication 4, **caractérisé en ce que** le conduit tubulaire de gaz (13) est disposé essentiellement au milieu à l'intérieur et parallèlement à l'axe longitudinal du missile (30).

6. Missile (30) selon une ou plusieurs des revendications précédentes, **caractérisé en ce que** le système d'éjection (2) comporte au moins un propergol (21).

7. Missile (30) selon une ou plusieurs des revendications précédentes, **caractérisé en ce que** le propulseur (3) comporte au moins un propergol (10, 12).

8. Missile (30) selon une ou plusieurs des revendications précédentes, **caractérisé en ce que** le gaz de propulsion (4) engendré dans le système d'éjection (2) peut être envoyé vers au moins une tuyère (7).

9. Missile (30) selon une ou plusieurs des revendications précédentes, **caractérisé en ce que** l'enveloppe (11, 110) du propulseur (3) fait partie de la chambre de combustion (1) mise en pression.
